# EUROPEAN PATENT SPECIFICATION

(11) **EP 1 448 741 B1**
(45) Date of publication and mention of the grant of the patent: **09.05.2007**
(21) Application number: 02778154.1
(22) Date of filing: 15.10.2002
(51) Int. Cl.: C09J 5/06, C08G 8/10, C09J 161/28

(54) **METHOD OF GLUING WOOD BASED MATERIALS**
VERFAHREN ZUM VERKLEBEN VON HOLZMATERIALIEN
PROCEDE DE COLLAGE DE MATERIAUX A BASE DE BOIS

(30) Priority: 18.10.2001 EP 01850173
(43) Date of publication of application: 25.08.2004
(73) Proprietor: Akzo Nobel Coatings International B.V., 6824 BM Arnhem (NL); Casco Adhesives AB, 100 61 Stockholm (SE)
(72) Inventor: PIRHONEN, Salme, S-192 75 Sollentuna (SE); NASLI-BAKIR, Benyahia, S-132 40 Saltsjö-boo (SE); LINDH, Ingvar, S-161 58 Bromma (SE)
(74) Representative: Jönsson, Christer
(86) International application number: PCT/SE2002/001881
(87) International publication number: WO 2003/033610

(56) References cited:
- EP-A- 0 277 106
- EP-A- 0 538 687
- DATABASE WPI Section Ch, Week 197723 Derwent Publications Ltd., London, GB; Class A21, AN 1977-40511Y XP002187543 & JP 52 051430 A (MITSUI TOATSU CHEM INC), 25 April 1977 (1977-04-25)

## Description

The present invention relates to a method of gluing wood based materials whereby an adhesive system comprising a melaminic amino resin and a phenolic resin composition comprising an acid and a phenolic resin are provided onto wood based materials and cured. The present invention also relates to an adhesive system and a stable phenolic resin composition. Furthermore, it also relates to a wood based product obtainable by the method. Finally, it relates to the use of an adhesive system for making a wood based product.

### Background

When gluing wood, it is common to use an adhesive system based on a curable resin, such as a formaldehyde resin, which, for example, can be an amino resin or a phenolic resin. Important properties of an adhesive include adhesive strength, curing time and temperature, water-resistance and emission of formaldehyde.

High water-resistance is especially required for some glued wooden products, such as laminated beams, plywood, and other products for outdoor use. Melaminic amino resin adhesives, and also phenolic resin based adhesives, are commonly used when high water-resistance is required. The advantages of using amino resin based adhesives over phenolic resin based ones are, for example, a much less coloured bondline and less environmental impacts since some phenolic resins need paraformaldehyde to cure.

Melaminic amino resins are condensates of carbonyl compounds, such as aldehydes, with melamine, or a combination of melamine with other compounds containing amino, imino or amide groups. The most common melaminic amino resins are condensates of formaldehyde and melamine alone, or melamine and urea giving melamine-formaldehyde ("MF") and melamine-urea-formaldehyde ("MUF"). A MUF resin can also be made by mixing an MF resin and a UF resin. Melaminic amino resins are usually cured by using acidic hardener compositions.

Emission of free aldehyde, particularly formaldehyde, from adhesives based on melamine based resins and phenolic based resins is a growing concern. Formaldehyde is to various extent present in formaldehyde based melaminic amino resins as free formaldehyde but also further emitted from the resins during curing. This gives environmental problems, both before curing during handling and application of the resin, and emission problems from the finished products after curing. Phenolic resins may also emit formaldehyde during curing and during handling of the resin.

JP Laid Open No. 1977-51430, discloses an adhesive composition for manufacturing plywood comprising a melamine resin and a resol-type phenolic resin. However, there is nothing mentioned about any reduction of formaldehyde emission.

EP 0277106 A1 discloses an amino resin which is a condensation product of formaldehyde, urea, phenol and, optionally, melamine.

EP 0538687 A1 discloses a fluid hardener for phenol-resorcinol-formaldehyde resins comprising a tannin resin.

Aldehyde emission from an adhesive system can be reduced by using various additives which act as catchers for the aldehyde. However, such additives do not generally themselves possess any adhesive properties. Thus, the quality of the adhesive bond may be negatively effected. Furthermore, these additives may take part in unwanted reactions with other components of the adhesive system, and addition of such additives also often creates a more complex formulation procedure.

Thus, it is desirable to provide a method of gluing wood based materials, and an adhesive system, which gives low emission of aldehyde, and high quality adhesive bonds.

Therefore, it is an object of the present invention to provide a method for gluing wood based materials which gives low emission of aldehyde. It is another object of the present invention to provide an adhesive system, as well as a phenolic resin composition intended for use in an adhesive system, which gives low emission of aldehyde. Finally, it is an object of the present invention to provide a wood based product which gives low emission of aldehyde.

### The Invention

It has surprisingly been found possible to meet these objects by a new method of gluing wood based materials using a new adhesive system and a new stable phenolic resin composition. The method according to the invention comprises gluing wood based materials by providing an adhesive system onto wood based materials followed by curing, the adhesive system comprising a melaminic amino resin and a phenolic resin composition, wherein the phenolic resin composition comprises an acid and a phenolic resin, which is a resorcinol resin or a tannin resin, or a mixture thereof. The adhesive system according to the invention comprises a melaminic amino resin, and a phenolic resin composition, wherein the phenolic resin composition comprises an acid and a phenolic resin, which is a resorcinol resin or a tannin resin, or a mixture thereof. The stable phenolic resin composition according to the invention exists as a solution in water or alcohol, and comprises an acid and a phenolic resin, which is a resorcinol resin or a tannin resin, or a mixture thereof the content of phenolic resin is from about 10 to about 80 weight %, based on dry matter, the phenolic resin being storage stable at room temperature (20°C) for more than about two weeks. The invention further relates to a wood based product obtainable by the method which can be a flooring material, plywood, a laminated beam and a fibre-, chip- or particle board material. Finally, the invention relates to the use of an adhesive system for making a wood based product which can be a flooring material, plywood, a laminated beam and a fibre-, chip- or particle board material.

The present invention provides a phenolic resin composition which is storage stable before mixing with a curable resin.

By the term "adhesive system", as used herein, is meant a curing formulation containing one or more curable resins and one or more curing agents.

By the term "melaminic amino resin", as used herein, is meant an amino resin where melamine is at least one of the raw materials used when making the resin.

The combination of a melaminic amino resin with a phenolic resin composition according to the invention makes it possible to provide an adhesive system with low emission of formaldehyde.

A further advantage with the present invention is that melaminic amino resins, having very low contents of free formaldehyde, can be used in order to achieve adhesive bonds with high quality.

The melaminic amino resin used in the method and the adhesive system of the invention can be any melaminic amino resin, such as melamine-formaldehyde ("MF"), melamine-urea-formaldehyde ("MUF"), melamine-urea-phenol-formaldehyde ("MUPF"), and condensates of formaldehyde and melamine together with any other compounds containing amino, imino or amide groups such as thiourea, substituted urea, and guanamines. The preferred melaminic amino resin is MF. The melaminic amino resin can also be an etherified resin. The "aldehyde to amino compound ratio", which is the molar ratio aldehyde to amino compound used when making the amino resin of the claimed adhesive system, is suitably less than 2.4, preferably from about 0.5 to about 2.3, most preferably from about 0.7 to about 2. The amount melamine of total amount amino compounds used when making the amino resin is suitably from about 10 to 100 mole %, preferably from about 30 to about 100 mole %, most preferably from about 50 to about 100 mole %. Optionally, fillers, thickeners or other additives, including aldehyde catchers, can be added to the amino resin. Examples of fillers are inorganic fillers such as kaolin and calcium carbonate or organic fillers such as wood flour, wheat flour, starch and gluten. Examples of thickeners are polyvinyl alcohol, and cellulose compounds such as hydroxy ethyl cellulose and carboxy methyl cellulose. Other additives can be, for example, polyols, polysaccharides, polyvinylalcohol, acrylates, and styrene-butadiene polymers. Homopolymers or copolymers of vinylesters may also be used as components, such as vinyl acetate, vinyl propionate, and vinyl butyrate. These polymers may also comprise post-crosslinking groups. Also aldehyde catchers such as urea and guanamines may be added. If components, like fillers or other additives, according to above, are present, their amount can usually be less than about 70 weight %, suitably from about 0.1 to about 70 weight %, preferably from about 1 to about 60 weight %, most preferably from about 5 to about 40 weight %.

Condensates of different phenolic compounds and aldehydes are referred to as phenolic resins. The phenolic compound can be phenol itself, polyhydric phenols, and aliphatically or aromatically substituted phenols. Examples of phenolic compounds are alkyl phenols such as resorcinol, alkyl resorcinol, cresols, ethyl phenol and xylenol, and also phenolic compounds of natural origin such as tannins, cardenol, and cardol. Examples of suitable aldehydes include formaldehyde, acetaldehyde, glutaraldehyde, propionaldehyde, n-butyraldehyde, isobutyraldehyde and furfural. As phenolic resins are herein also included tannins themselves, without having formed condensates with aldehydes. Examples of tannins are condensed tannins, such as bi-, tri, and tetraflavanoids, and further condensed flavanoids. The phenolic resin in the present invention is a resorcinol resin or a tannin resin, or a mixture thereof. The phenolic resin exists as a solution in water, or alcohol such as ethanol. Tannins can also be present as solid materials. Suitably, the phenolic resin exists as an aqueous solution with varying dry content of resin. Suitably, the phenolic resin is a formaldehyde-based phenolic resin. Preferred formaldehyde based phenolic resins in the phenolic resin composition are resorcinol-formaldehyde ("RF"), phenol-resorcinol-formaldehyde ("PRF"), and tannin-formaldehyde ("TF") resins. The most preferred being PRF. In the case of RF and PRF resins, the molar ratio of formaldehyde to total amount phenolic compounds (one or both of phenol and resorcinol) in the PRF resin, calculated as added when making the resins, can be from about 0.1 to about 2, suitably from about 0.2 to about 1.5, preferably from about 0.3 to about 1. The molar ratio phenol to resorcinol in the PRF resin, calculated as added when making the PRF resin, can be from about 0.02 to about 15, suitably from about 0.05 to about 10, preferably from about 0.1 to about 5, most preferably from about 0.2 to about 2. Alternatively, the PRF resin can be a substantially PF resin, containing substantially no resorcinol, of a resol type having resorcinol grafted onto it as terminal groups.

Examples of suitable acids include organic and inorganic protonic acids, acidic salts, and acid generating salts. As acid is also meant metal salts giving acidic reaction in aqueous solutions, also referred to herein as non-protonic acids. Examples of suitable non-protonic acids include aluminium chloride, aluminium nitrate and aluminium sulphate. Suitable organic protonic acids include aliphatic or aromatic mono-, di-, tri-, or polycarboxylic acids such as formic acid, acetic acid, maleic acid, malonic acid and citric acid. Also sulphonic acids such as para-toluene sulphonic acid, para-phenol sulphonic acid and benzene sulphonic acid are suitable. Inorganic protonic acids can be, for example, hydrochloric acid, sulphuric acid, nitric acid, phosphoric acid, boric acid, sulphamic acid and ammonium salts such as ammonium chloride and ammonium sulphate. Examples of acid generating salts are formiates and acetates such as sodium formiate, sodium acetate, ammonium formiate, and ammonium acetate. A strong acid such as hydrochloric acid or sulphuric acid may be combined with an alkyl amine in the phenolic resin composition thereby forming an alkyl amine salt. The phenolic resin composition may comprise more than one acid, for example, two, three or several acids. Also, the phenolic resin composition may comprise a combination of both an organic acid and an inorganic acid. Suitably, the acid is soluble in the phenolic resin, and solutions of the phenolic resin. In some cases, one or more additives, which improve the solubility of the acid in the phenolic resin, are suitably used. Such additives can be polyglycols such as polyethylene glycol, polypropylene glycol, ketones such as acetone, and dialkyl ethers such as ethylene glycol monobutyl ether, diethylene glycol monobutyl ether, propylene glycol monomethyl ether, diethylene glycol monomethyl ether, and, dipropylene glycol monomethyl ether. Acids suitable in the phenolic resin composition depends partly on the type of structure to be glued. For example, applications such as gluing laminated beams benefits from the use of volatile acids, which evaporates off from the adhesive layer. By the term "volatile acid" is herein meant an acid having a low boiling point, and/or having a high vapour pressure at room temperature. Said acids should suitably have a vapour pressure of more than 10 mm Hg at a temperature of up to 60 °C. Examples of organic volatile acids include formic acid, acetic acid and pyrovic acid. Suitable inorganic acids include, for example, hydrochloric acid. Preferably, formic acid is used as a volatile acid.

In a preferred embodiment of the invention, a combination of a MF resin with a phenolic resin composition comprising a PRF resin and formic acid, gives an adhesive system which gives low emission of formaldehyde.

The phenolic resin composition may, optionally, comprise fillers, thickeners or other additives. These can be inorganic fillers such as kaolin and calcium carbonate or organic fillers such as wood flour, wheat flour, starch and gluten. Examples of thickeners are polyvinyl alcohol, and cellulose compounds such as hydroxy ethyl cellulose and carboxy methyl cellulose. Other additives can be, for example, polyols, polysaccharides, polyvinylalcohol, acrylates, and styrene-butadiene polymers. Homopolymers or copolymers of vinylesters such as vinyl acetate, vinyl propionate, and vinyl butyrate, may also be used as additives, and also aldehyde catchers such as urea and guanamines.

The phenolic resin composition should preferably be storage stable meaning that substantially no curing of the phenolic resin should take place in the phenolic resin composition itself. An indicator for storage stability is the degree of gelling, either occurring evenly throughout the phenolic resin composition, or as lumps of gelled particles in the composition. Gelling throughout the composition gives an increased viscosity. The phenolic resin composition is considered storage stable if it has not gelled according to the above and if it functions in the application equipment used for applying the composition onto wood based materials. The stable phenolic resin composition according to the invention is storage stable at room temperature (20°C) for more than about two weeks, preferably more than about one month, most preferably more than about six months.

The content of phenolic resin in the phenolic resin composition is from about 1 to about 80 weight %, based on dry matter, suitably from about 5 to about 70 weight %, preferably from about 10 to about 65 weight %, and most preferably from about 20 to about 60 weight %. The content of the acid in the phenolic resin composition depends on the original pH of the phenolic resin itself used in the phenolic resin composition. The content of the acid, including its salts, in the phenolic resin composition can be up to about 50 weight %, suitably from about 0.5 to about 50 weight %, preferably from about 1 to about 40 weight %, and most preferably from about 2 to about 30 weight %. If other components, like fillers or other additives, are present, their amount can usually be less than about 70 weight %, suitably from about 0.1 to about 70 weight %, preferably from about 1 to about 60 weight %, most preferably from about 5 to about 40 weight %. The pH of the phenolic resin composition is suitably from about 0 to about 6, preferably from about 0 to about 4, even more preferably from about 0.1 to about 3, most preferably from about 0.3 to about 2.

The pH of the adhesive system will effect the curing rate of the adhesive system and may be chosen thereafter. The pH of the adhesive system can be from about 0 to about 7, preferably from about 0 to about 5, and most preferably from about 0 to about 4.

Depending on the wood based materials to be glued as well as the way of providing the adhesive system onto the wood based materials, the preferred weight ratios of amino resin to phenolic resin may vary. The weight ratio amino resin to phenolic resin in the adhesive system can be from about 0.1 to about 30, based on dry matter, suitably from about 0.2 to about 10. In a preferred embodiment of the invention, the weight ratio amino resin to phenolic resin, based on dry matter, in the adhesive system is preferably from about 0.5 to about 2. Among suitable uses for this range is, for example, the production of a laminated beam. In another preferred embodiment of the invention, the weight ratio amino resin to phenolic resin, based on dry matter, in the adhesive system is preferably from about 2 to about 10. Among suitable uses for this range is, for example, the production of a flooring material.

The curing temperature, in the glue line, for the adhesive system of the present invention is suitably from about 0 to about 120°C. If no high frequency curing is used, the curing temperature is preferably from about 5 to about 80°C, most preferably from about 10 to about 40°C.

The wood based materials according to the method of the invention can be of any kind that can be joined by an adhesive system, including fibres, chips and particles. Suitably, the wood-based materials are layers in a flooring material such as parquet flooring, the layers in plywood, parts in laminated beams, or fibres, chips and particles for making fibre-, chip-, or particleboard material. Preferably, the wood-based materials are parts in laminated beams.

In the method of the present invention, the adhesive system can be provided by separately applying the amino resin and the phenolic resin composition onto the wood based materials. Alternatively, the method of the invention can comprise mixing the amino resin and the phenolic resin composition to form the adhesive system and then providing the adhesive system onto the wood based materials.

Separate application include, for example, application of the amino resin onto one or several wood based materials and application of the phenolic resin composition onto one or several wood based materials onto which no amino resin have been previously applied. Thereafter, the wood based materials onto which only amino resin has been applied and the wood based materials onto which only phenolic resin composition has been applied are joined together providing a mixing of the two components forming an adhesive system which can be cured. Separate application also include, for example, application of the amino resin onto one or several wood based materials and application of the phenolic resin composition onto the same wood based materials. The amino resin and phenolic resin composition may be applied completely onto each other, partially onto each other, or without being in contact with each other. The surface of the wood based material with both amino resin and phenolic resin composition applied is thereafter joined with another surface of a wood based material, which also may have been applied with both amino resin and phenolic resin composition, thereby providing a good mixing of the amino resin and the phenolic resin composition forming an adhesive system which can be cured. Separate application of the amino resin and the phenolic resin composition can be made in any order onto the wood based materials to be glued.

Suitable amounts of the components to be applied can be in the range of 100-500 g/m² depending, inter alia, on the feeding rate of a moving substrate.

The application of the amino resin and phenolic resin composition, or the mixture of both, onto a wood based material can be made by using any suitable method known in the art, such as spraying, brushing, extruding, roll-spreading, curtain-coating etc. forming shapes such as droplets, one or several strands, beads or a substantially continuous layer.

In the case of gluing together wood materials in the form of fibres, chips or particles, the amino resin and the phenolic resin composition is suitably applied as a mixture which coats the wood based materials with the adhesive system.

The wood based product according to the invention is suitably a laminated beam, plywood, a fibre-, chip- or particleboard, or a flooring material. Preferably, the wood based product is a laminated beam.

The invention will now further be described in connection with the following examples which, however, not should be interpreted as limiting the scope of the invention.

### Examples

Example 1: Three different phenolic resin compositions were made: PRF resin and pTSA (the present invention), tannin and pTSA (the present invention), and PF resin and pTSA. The PRF resin had a dry content of 55 weight %. The tannin was of a type extracted from Quebracho wood and present as a solid powder. The PF resin was of a resol type, having a dry content of 47 weight %.

**Table 1.**

| Phenolic resin composition | Phenolic resin content, wt% | pTSA content, wt% | Stability |
|---|---|---|---|
| PRF + pTSA | 48 | 6.4 | Excellent |
| tannin + pTSA | 36 | 22.7 | Excellent |
| PF + pTSA | 45 | 27.8 | Insufficient (< 1 week) |

It is concluded that:
- A PF resin of a resol type does not form a stable phenolic resin composition.
- PRF and tannin resin form stable phenolic resin compositions.

Example 2: An MF resin was combined with a phenolic resin composition according to the present invention. The MF resin had a formaldehyde to melamine ratio of 2. The PRF resin had a dry content of 55 weight % and the molar ratio of formaldehyde to phenol and resorcinol when making the resin was 0.53. The weight ratio MF to PRF was 1.2. The stable phenolic resin composition according to the present invention comprised formic acid in an amount of 20 weight %. The adhesive system above was compared with single resin MF and PRF systems having conventional, i.e., acid based and paraformaldehyde based hardeners. Here, the MF resin had a formaldehyde to melamine ratio of 2, the PRF resin had a dry content of 55 weight %, and the molar ratio of formaldehyde to phenol and resorcinol when making the resin was 0.61. The emission of formaldehyde was measured as direct emission, during 150 minutes, from 5 g of a mixture (before curing) of the MF- and PRF resin with respective hardeners and the MF resin with the phenolic resin composition according to the invention.

Formaldehyde emission from glued structures was also tested according to an internal method (IAR 129) based on JAS MAFF992. For each adhesive system, five plies (150 x 150 mm) of fir were glued together with 380 g/m² of a mixture of adhesive system components: MF with conventional acid hardener, PRF with conventional paraformaldehyde hardener, and MF resin with the phenolic resin composition according to the invention. The laminate was pressed at 0.8 MPa for 12 hours at 20°C and subsequently conditioned at 20 °C at 65% relative humidity for one week. Pieces of 25x10x75 mm were cut out and put in a 4 litre chamber where also a small container with 20 ml of water was put. After 18 hours at 23°C the content of formaldehyde in the water was measured.

**Table 5.**

| | Direct formaldehyde emission | Formaldehyde emission | Water resistance standard EN 301 |
|---|---|---|---|
| | (mg/l) | (IAR 129, mg/l)) | |
| MF + (PRF + formic acid) | 0.06 | 4.9 | pass |
| MF + acid hardener | 0.33 | 5.8 | pass |
| PRF + paraformaldehyde hardener | 0.13 | 9.8 | pass |

It is concluded that the present invention gives lower emission of formaldehyde than when using an MF resin or a PRF resin alone with conventional hardeners.

## Claims

1. A method of gluing wood based materials by providing an adhesive system onto wood based materials followed by curing, the adhesive system comprising a melaminic amino resin and a phenolic resin composition, **characterised in that** the phenolic resin composition comprises an acid and a phenolic resin which is a resorcinol resin or a tannin resin, or a mixture thereof.

2. A method according to claim 1, **characterised in that** the adhesive system is provided by separately applying the amino resin and the phenolic resin composition onto the wood based materials.

3. A method according to claim 1, **characterised in that** it comprises mixing the amino resin and the phenolic resin composition to form the adhesive system and then providing the adhesive system onto the wood based materials.

4. A method according to any one of claims 1-3, **characterised in that** the amount melamine of total amount amino compounds used when making the amino resin is from 30 to 100 mole %.

5. A method according to any one of claims 1-4, **characterised in that** the weight ratio amino resin to phenolic resin is from 0.5 to 2, based on dry matter.

6. A method according to any one of claims 1-5, **characterised in that** the amino resin is a melamine-formaldehyde resin.

7. A method according to any one of claims 1-5, **characterised in that** the amino resin is a melamine-urea-formaldehyde resin.

8. A method according to any one of claims 1-7, **characterised in that** the pH of the adhesive system is from 0 to 4.

9. A method according to any one of claims 1-8, **characterised in that** the content of phenolic resin in the phenolic resin composition is from 10 to 80 weight %, based on dry matter.

10. A method according to any one of claims 1-9, **characterised in that** the phenolic resin is a phenol-resorcinol-formaldehyde resin.

11. A method according to any one of claims 1-10, **characterised in that** the phenolic resin is a tannin-formaldehyde resin or a tannin.

12. A method according to any one of claims 1-11, **characterised in that** the acid is aluminium chloride, aluminium nitrate or aluminium sulphate.

13. A method according to any one of claims 1-11, **characterised in that** the acid is selected from the group of mono-, di-, tri- or polycarboxylic acids and sulphonic acids.

14. A method according to claim 13, **characterised in that** the acid is selected from the group of formic acid, acetic acid and pyrovic acid.

15. A method according to any one of claims 1-11, **characterised in that** the acid is selected from the group of hydrochloric acid, sulphuric acid, nitric acid, phosphoric acid, boric acid, sulphamic acid and ammonium salts.

16. A method according to any one of claims 1-15, **characterised in that** the content of phenolic resin in the phenolic resin composition is from 20 to 60 weight %, based on dry matter.

17. A method according to any one of claims 1-16, **characterised in that** the content of the acid, including its salts, in the phenolic resin composition is from 2 to 30 weight %.

18. A method according to any one of claims 1-17, **characterised in that** the pH of the phenolic resin composition is from 0 to 3.

19. An adhesive system comprising a melaminic amino resin and a phenolic resin composition, **characterised in that** the phenolic resin composition comprises an acid and a phenolic resin, which is a resorcinol resin or a tannin resin, or a mixture thereof.

20. An adhesive system according to claim 19, **characterised in that** the amount melamine of total amount amino compounds used when making the amino resin is from 30 to 100 mole %.

21. An adhesive system according to any one of claims 19-20, **characterised in that** the weight ratio amino resin to phenolic resin is from 0.5 to 2, based on dry matter.

22. An adhesive system according to any one of claims 19-21, **characterised in that** the amino resin is a melamine-formaldehyde resin.

23. An adhesive system according to any one of claims 19-21, **characterised in that** the amino resin is a melamine-urea-formaldehyde resin.

24. An adhesive system according to any one of claims 19-23, **characterised in that** the pH of the adhesive system is from 0 to 4.

25. An adhesive system according to any one of claims 19-24, **characterised in that** the content of phenolic resin in the phenolic resin composition is from 10 to 80 weight %, based on dry matter.

26. An adhesive system according to any one of claims 19-25, **characterised in that** the phenolic resin is a phenol-resorcinol-formaldehyde resin.

27. An adhesive system according to any one of claims 19-25, **characterised in that** the phenolic resin is a tannin-formaldehyde resin or a tannin.

28. An adhesive system according to any one of claims 19-27, **characterised in that** the acid is aluminium chloride, aluminium nitrate or aluminium sulphate.

29. An adhesive system according to any one of claims 19-27, **characterised in that** the acid is selected from the group of mono-, di-, tri- or polycarboxylic acids and sulphonic acids.

30. An adhesive system according to claim 29, **characterised in that** the acid is selected from the group of formic acid, acetic acid and pyrovic acid.

31. An adhesive system according to any one of claims 19-27, **characterised in that** the acid is selected from the group of hydrochloric acid, sulphuric acid, nitric acid, phosphoric acid, boric acid, sulphamic acid and ammonium salts.

32. An adhesive system according to any one of claims 19-31, **characterised in that** the content of phenolic resin in the phenolic resin composition is from 20 to 60 weight %, based on dry matter.

33. An adhesive system according to any one of claims 19-32, **characterised in that** the content of the acid, including its salts, in the phenolic resin composition is from 2 to 30 weight %.

34. An adhesive system according to any one of claims 19-33, **characterised in that** the pH of the phenolic resin composition is from 0 to 3.

35. A stable phenolic resin composition for use in an melaminic amino resin based adhesive system, **characterised in that** it exists as a solution in water or alcohol, comprises an acid and a phenolic resin, which is a resorcinol resin or a tannin resin, or a mixture thereof, the content of phenolic resin is from 10 to 80 weight %, based on dry matter, the phenolic resin composition being storage stable at room temperature (20°C) for more than two weeks.

36. A phenolic resin composition according to claim 35, **characterised in that** the phenolic resin is a phenol-resorcinol-formaldehyde resin.

37. A phenolic resin composition according to claim 35, **characterised in that** the phenolic resin is a tannin-formaldehyde resin or a tannin.

38. A phenolic resin composition according to any one of claims 35-37, **characterised in that** the acid is aluminium chloride, aluminium nitrate or aluminium sulphate.

39. A phenolic resin composition according to any one of claims 35-37, **characterised in that** the acid is selected from the group of mono-, di-, tri- or polycarboxylic acids and sulphonic acids.

40. A phenolic resin composition according to claim 39, **characterised in that** the acid is selected from the group of formic acid, acetic acid and pyrovic acid.

41. A phenolic resin composition according to any one of claims 35-37, **characterised in that** the acid is selected from the group of hydrochloric acid, sulphuric acid, nitric acid, phosphoric acid, boric acid, sulphamic acid and ammonium salts.

42. A phenolic resin composition according to any one of claims 35-41, **characterised in that** the content of phenolic resin in the phenolic resin composition is from 20 to 60 weight %, based on dry matter.

43. A phenolic resin composition according to any one of claims 35-42, **characterised in that** the content of the acid, including its salts, in the phenolic resin composition is from 2 to 30 weight %.

44. A phenolic resin composition according to any one of claims 35-43, **characterised in that** the pH of the phenolic resin composition is from 0 to 3.

45. A wood based product obtainable by the method according to any one of claims 1-18.

46. A wood based product according to claim 45, **characterised in that** it is a laminated beam.

47. Use of an adhesive system according to any one of claims 19-34 for making a wood based product.

48. Use according to claim 47, **characterised in that** the wood based product is a laminated beam.

## Patentansprüche

1. Verfahren zum Verkleben von Materialien auf Holzbasis durch Bereitstellen eines Klebstoffsystems auf den Materialien auf Holzbasis, gefolgt von Härten, wobei das Klebstoffsystem ein Melaminaminoharz und eine Phenolharzzusammensetzung umfasst, **dadurch gekennzeichnet, dass** die Phenolharzzusammensetzung eine Säure und ein Phenolharz umfasst, welches ein Resorcinolharz oder ein Tanninharz oder ein Gemisch davon ist.

2. Verfahren gemäß Anspruch 1, **dadurch gekennzeichnet, dass** das Klebstoffsystem bereitgestellt wird durch getrenntes Auftragen des Aminoharzes und der Phenolharzzusammensetzung auf die Materialien auf Holzbasis.

3. Verfahren gemäß Anspruch 1, **dadurch gekennzeichnet, dass** es das Mischen des Aminoharzes und der Phenolharzzusammensetzung, um das Klebstoffsystem herzustellen, und anschließend das Bereitstellen des Klebstoffsystems auf den Materialien auf Holzbasis umfasst.

4. Verfahren gemäß einem der Ansprüche 1 bis 3, **dadurch gekennzeichnet, dass** die Menge an Melamin der Gesamtmenge an Aminoverbindungen, die bei der Herstellung des Aminoharzes verwendet wird, 30 bis 100 Mol-% beträgt.

5. Verfahren gemäß einem der Ansprüche 1 bis 4, **dadurch gekennzeichnet, dass** das Gewichtsverhältnis von Aminoharz zu Phenolharz 0,5 bis 2, bezogen auf die Trockenmasse, beträgt.

6. Verfahren gemäß einem der Ansprüche 1 bis 5, **dadurch gekennzeichnet, dass** das Aminoharz ein Melamin-Formaldehydharz ist.

7. Verfahren gemäß einem der Ansprüche 1 bis 5, **dadurch gekennzeichnet, dass** das Aminoharz ein Melamin-Harnstoff Formaldehydharz ist.

8. Verfahren gemäß einem der Ansprüche 1 bis 7, **dadurch gekennzeichnet, dass** der pH-Wert des Klebstoffsystems 0 bis 4 beträgt.

9. Verfahren gemäß einem der Ansprüche 1 bis 8, **dadurch gekennzeichnet, dass** der Gehalt an Phenolharz in der Phenolharzzusammensetzung 10 bis 80 Gew.-%, bezogen auf die Trockenmasse, beträgt.

10. Verfahren gemäß einem der Ansprüche 1 bis 9, **dadurch gekennzeichnet, dass** das Phenolharz ein Phenol-Resorcinol-Formaldehydharz ist.

11. Verfahren gemäß einem der Ansprüche 1 bis 10, **dadurch gekennzeichnet, dass** das Phenolharz ein Tannin-Formaldehydharz oder ein Tannin ist.

12. Verfahren gemäß einem der Ansprüche 1 bis 11, **dadurch gekennzeichnet, dass** die Säure Aluminiumchlorid, Aluminiumnitrat oder Aluminiumsulfat ist.

13. Verfahren gemäß einem der Ansprüche 1 bis 11, **dadurch gekennzeichnet, dass** die Säure ausgewählt ist aus Mono-, Di-, Tri- oder Polycarbonsäuren und Sulfonsäuren.

14. Verfahren gemäß Anspruch 13, **dadurch gekennzeichnet, dass** die Säure ausgewählt ist aus Ameisensäure, Essigsäure und Brenztraubensäure.

15. Verfahren gemäß einem der Ansprüche 1 bis 11, **dadurch gekennzeichnet, dass** die Säure ausgewählt ist aus Chlorwasserstoffsäure, Schwefelsäure, Salpetersäure, Phosphorsäure, Borsäure, Sulfaminsäure und Ammoniumsalzen.

16. Verfahren gemäß einem der Ansprüche 1 bis 15, **dadurch gekennzeichnet, dass** der Gehalt an Phenolharz in der Phenolharzzusammensetzung 20 bis 60 Gew.-%, bezogen auf die Trockenmasse, beträgt.

17. Verfahren gemäß einem der Ansprüche 1 bis 16, **dadurch gekennzeichnet, dass** der Gehalt an Säure, einschließlich ihrer Salze, in der Phenolharzzusammensetzung 2 bis 30 Gew.-% beträgt.

18. Verfahren gemäß einem der Ansprüche 1 bis 17, **dadurch gekennzeichnet, dass** der pH-Wert der Phenolharzzusammensetzung 0 bis 3 beträgt.

19. Klebstoffsystem, umfassend ein Melaminaminoharz und eine Phenolharzzusammensetzung, **dadurch gekennzeichnet, dass** die Phenolharzzusammensetzung eine Säure und ein Phenolharz umfasst, welches ein Resorcinolharz oder ein Tanninharz oder ein Gemisch davon ist.

20. Klebstoffsystem gemäß Anspruch 19, **dadurch gekennzeichnet, dass** die Menge an Melamin der Gesamtmenge an Aminoverbindungen, die bei der Herstellung des Aminoharzes verwendet wird, 30 bis 100 Mol-% beträgt.

21. Klebstoffsystem gemäß einem der Ansprüche 19 bis 20, **dadurch gekennzeichnet, dass** das Gewichtsverhältnis von Aminoharz zu Phenolharz 0,5 bis 2, bezogen auf die Trockenmasse, beträgt.

22. Klebstoffsystem gemäß einem der Ansprüche 19 bis 21, **dadurch gekennzeichnet, dass** das Aminoharz ein Melamin-Formaldehydharz ist.

23. Klebstoffsystem gemäß einem der Ansprüche 19 bis 21, **dadurch gekennzeichnet, dass** das Aminoharz ein Melamin-Harnstoff-Formaldehydharz ist.

24. Klebstoffsystem gemäß einem der Ansprüche 19 bis 23, **dadurch gekennzeichnet, dass** der pH-Wert des Klebstoffsystems 0 bis 4 beträgt.

25. Klebstoffsystem gemäß einem der Ansprüche 19 bis 24, **dadurch gekennzeichnet, dass** der Gehalt an Phenolharz in der Phenolharzzusammensetzung 10 bis 80 Gew.-%, bezogen auf die Trockenmasse, beträgt.

26. Klebstoffsystem gemäß einem der Ansprüche 19 bis 25, **dadurch gekennzeichnet, dass** das Phenolharz ein Phenol-Resorcinol-Formaldehydharz ist.

27. Klebstoffsystem gemäß einem der Ansprüche 19 bis 25, **dadurch gekennzeichnet, dass** das Phenolharz ein Tannin-Formaldehydharz oder ein Tannin ist.

28. Klebstoffsystem gemäß einem der Ansprüche 19 bis 27 **dadurch gekennzeichnet, dass** die Säure Aluminiumchlorid, Aluminiumnitrat oder Aluminiumsulfat ist.

29. Klebstoffsystem gemäß einem der Ansprüche 19 bis 27, **dadurch gekennzeichnet, dass** die Säure ausgewählt ist aus Mono-, Di-, Tri- oder Polycarbonsäuren und Sulfonsäuren.

30. Klebstoffsystem gemäß Anspruch 29, **dadurch gekennzeichnet, dass** die Säure ausgewählt ist aus Ameisensäure, Essigsäure und Brenztraubensäure.

31. Klebstoffsystem gemäß einem der Ansprüche 19 bis 27, **dadurch gekennzeichnet, dass** die Säure ausgewählt ist aus Chlorwasserstoffsäure, Schwefelsäure, Salpetersäure, Phosphorsäure, Borsäure, Sulfaminsäure und Ammoniumsalzen.

32. Klebstoffsystem gemäß einem der Ansprüche 19 bis 31, **dadurch gekennzeichnet, dass** der Gehalt an Phenolharz in der Phenolharzzusammensetzung 20 bis 60 Gew.-%, bezogen auf die Trockenmasse, beträgt.

33. Klebstoffsystem gemäß einem der Ansprüche 19 bis 32, **dadurch gekennzeichnet, dass** der Gehalt an Säure, einschließlich ihrer Salze, in der Phenolharzzusammensetzung 2 bis 30 Gew.-% beträgt.

34. Klebstoffsystem gemäß einem der Ansprüche 19 bis 33, **dadurch gekennzeichnet, dass** der pH-Wert der Phenolharzzusammensetzung 0 bis 3 beträgt.

35. Stabile Phenolharzzusammensetzung zur Verwendung in einem Klebstoffsystem auf Melaminaminoharzbasis, **dadurch gekennzeichnet, dass** sie als Lösung in Wasser oder Alkohol existiert, eine Säure und ein Phenolharz umfasst, welches ein Resorcinolharz oder ein Tanninharz oder ein Gemisch davon ist, der Gehalt an Phenolharz 10 bis 80 Gew.-%, bezogen auf die Trockenmasse, beträgt, wobei die Phenolharzzusammensetzung bei Raumtemperatur (20°C) für mehr als zwei Wochen lagerstabil ist.

36. Phenolharzzusammensetzung gemäß Anspruch 35, **dadurch gekennzeichnet, dass** das Phenolharz ein Phenol-Resorcinol-Formaldehydharz ist.

37. Phenolharzzusammensetzung gemäß Anspruch 35, **dadurch gekennzeichnet, dass** das Phenolharz ein Tannin-Formaldehydharz oder ein Tannin ist.

38. Phenolharzzusammensetzung gemäß einem der Ansprüche 35 bis 37 **dadurch gekennzeichnet, dass** die Säure Aluminiumchlorid, Aluminiumnitrat oder Aluminiumsulfat ist.

39. Phenolharzzusammensetzung gemäß einem der Ansprüche 35 bis 37, **dadurch gekennzeichnet, dass** die Säure ausgewählt ist aus Mono-, Di-, Tri- oder Polycarbonsäuren und Sulfonsäuren.

40. Phenolharzzusammensetzung gemäß Anspruch 39, **dadurch gekennzeichnet, dass** die Säure ausgewählt ist aus Ameisensäure, Essigsäure und Brenztraubensäure.

41. Phenolharzzusammensetzung gemäß einem der Ansprüche 35 bis 37, **dadurch gekennzeichnet, dass** die Säure ausgewählt ist aus Chlorwasserstoffsäure, Schwefelsäure, Salpetersäure, Phosphorsäure, Borsäure, Sulfaminsäure und Ammoniumsalzen.

42. Phenolharzzusammensetzung gemäß einem der Ansprüche 35 bis 41, **dadurch gekennzeichnet, dass** der Gehalt an Phenolharz in der Phenolharzzusammensetzung 20 bis 60 Gew.-%, bezogen auf die Trockenmasse, beträgt.

43. Phenolharzzusammensetzung gemäß einem der Ansprüche 35 bis 42, **dadurch gekennzeichnet, dass** der Gehalt an Säure, einschließlich ihrer Salze, in der Phenolharzzusammensetzung 2 bis 30 Gew.-% beträgt.

44. Phenolharzzusammensetzung gemäß einem der Ansprüche 35 bis 43, **dadurch gekennzeichnet, dass** der pH-Wert der Phenolharzzusammensetzung 0 bis 3 beträgt.

45. Produkt auf Holzbasis, erhältlich durch das Verfahren gemäß einem der Ansprüche 1 bis 18.

46. Produkt auf Holzbasis gemäß Anspruch 45, **dadurch gekennzeichnet, dass** es ein laminierter Balken ist.

47. Verwendung eines Klebstoffsystems gemäß einem der Ansprüche 19 bis 34 zur Herstellung eines Produkts auf Holzbasis.

48. Verwendung gemäß Anspruch 47, **dadurch gekennzeichnet, dass** das Produkt auf Holzbasis ein laminierter Balken ist.

## Revendications

1. Procédé de collage de matériaux à base de bois, par application d'un système adhésif sur des matériaux à base de bois et durcissement subséquent, ledit système adhésif comprenant une résine aminoplaste à base de mélamine et une composition de résine phénolique, **caractérisé en ce que** la composition de résine phénolique comprend un acide et une résine phénolique qui est une résine à base de résorcinol ou une résine à base de tanin, ou un mélange de telles résines.

2. Procédé conforme à la revendication 1, **caractérisé en ce que** l'on applique le système adhésif en appliquant séparément la résine aminoplaste et la composition de résine phénolique sur les matériaux à base de bois.

3. Procédé conforme à la revendication 1, **caractérisé en ce qu'**il comporte le fait de mélanger la résine aminoplaste et la composition de résine phénolique pour en faire un système adhésif, et le fait d'appliquer ensuite ce système adhésif sur les matériaux à base de bois.

4. Procédé conforme à l'une des revendications 1 à 3, **caractérisé en ce que**, dans la quantité totale de composés aminés utilisée dans la préparation de la résine aminoplaste, il y a de 30 à 100 % en moles de mélamine.

5. Procédé conforme à l'une des revendications 1 à 4, **caractérisé en ce que** le rapport pondéral de la résine aminoplaste à la résine phénolique, calculé en matières séches, vaut de 0,5 à 2.

6. Procédé conforme à l'une des revendications 1 à 5, **caractérisé en ce que** la résine aminoplaste est une résine mélamine-formol.

7. Procédé conforme à l'une des revendications 1 à 5, **caractérisé en ce que** la résine aminoplaste est une résine mélamine-urée-formol.

8. Procédé conforme à l'une des revendications 1 à 7, **caractérisé en ce que** le pH du système adhésif vaut de 0 à 4.

9. Procédé conforme à l'une des revendications 1 à 8, **caractérisé en ce que** la proportion pondérale de résine phénolique dans la composition de résine phénolique, calculée en matières sèches, vaut de 10 à 80 %.

10. Procédé conforme à l'une des revendications 1 à 9, **caractérisé en ce que** la résine phénolique est une résine phénol-résorcinol-formol.

11. Procédé conforme à l'une des revendications 1 à 10, **caractérisé en ce que** la résine phénolique est une résine tanin-formol ou un tanin.

12. Procédé conforme à l'une des revendications 1 à 11, **caractérisé en ce que** l'acide est du chlorure d'aluminium, du nitrate d'aluminium ou du sulfate d'aluminium.

13. Procédé conforme à l'une des revendications 1 à 11, **caractérisé en ce que** l'acide est choisi dans l'ensemble constitué par les acides monocarboxyliques, dicarboxyliques, tricarboxyliques et polycarboxyliques et les acides sulfoniques.

14. Procédé conforme à la revendication 13, **caractérisé en ce que** l'acide est choisi dans l'ensemble constitué par l'acide formique, l'acide acétique et l'acide pyruvique.

15. Procédé conforme à l'une des revendications 1 à 11, **caractérisé en ce que** l'acide est choisi dans l'ensemble constitué par l'acide chlorhydrique, l'acide sulfurique, l'acide nitrique, l'acide phosphorique, l'acide borique, l'acide sulfamique et les sels d'ammonium.

16. Procédé conforme à l'une des revendications 1 à 15, **caractérisé en ce que** la proportion pondérale de résine phénolique dans la composition de résine phénolique, calculée en matières sèches, vaut de 20 à 60 %.

17. Procédé conforme à l'une des revendications 1 à 16, **caractérisé en ce que** la proportion pondérale de l'acide, y compris ses sels, dans la composition de résine phénolique vaut de 2 à 30 %.

18. Procédé conforme à l'une des revendications 1 à 17, **caractérisé en ce que** le pH de la composition de résine phénolique vaut de 0 à 3.

19. Système adhésif comprenant une résine aminoplaste à base de mélamine et une composition de résine phénolique, **caractérisé en ce que** la composition de résine phénolique comprend un acide et une résine phénolique qui est une résine à base de résorcinol ou une résine à base de tanin, ou un mélange de telles résines.

20. Système adhésif conforme à la revendication 19, **caractérisé en ce que**, dans la quantité totale de composés aminés utilisée dans la préparation de la résine aminoplaste, il y a de 30 à 100 % en moles de mélamine.

21. Système adhésif conforme à l'une des revendications 19 à 20, **caractérisé en ce que** le rapport pondéral de la résine aminoplaste à la résine phénolique, calculé en matières séches, vaut de 0,5 à 2.

22. Système adhésif conforme à l'une des revendications 19 à 21, **caractérisé en ce que** la résine aminoplaste est une résine mélamine-formol.

23. Système adhésif conforme à l'une des revendications 19 à 21, **caractérisé en ce que** la résine aminoplaste est une résine mélamine-urée-formol.

24. Système adhésif conforme à l'une des revendications 19 à 23, **caractérisé en ce que** le pH de ce système adhésif vaut de 0 à 4.

25. Système adhésif conforme à l'une des revendications 19 à 24, **caractérisé en ce que** la proportion pondérale de résine phénolique dans la composition de résine phénolique, calculée en matières sèches, vaut de 10 à 80 %.

26. Système adhésif conforme à l'une des revendications 19 à 25, **caractérisé en ce que** la résine phénolique est une résine phénol-résorcinol-formol.

27. Système adhésif conforme à l'une des revendications 19 à 25, **caractérisé en ce que** la résine phénolique est une résine tanin-formol ou un tanin.

28. Système adhésif conforme à l'une des revendications 19 à 27, **caractérisé en ce que** l'acide est du chlorure d'aluminium, du nitrate d'aluminium ou du sulfate d'aluminium.

29. Système adhésif conforme à l'une des revendications 19 à 27, **caractérisé en ce que** l'acide est choisi dans l'ensemble constitué par les acides monocarboxyliques, dicarboxyliques, tricarboxyliques et polycarboxyliques et les acides sulfoniques.

30. Système adhésif conforme à la revendication 29, **caractérisé en ce que** l'acide est choisi dans l'ensemble constitué par l'acide formique, l'acide acétique et l'acide pyruvique.

31. Système adhésif conforme à l'une des revendications 19 à 27, **caractérisé en ce que** l'acide est choisi dans l'ensemble constitué par l'acide chlorhydrique, l'acide sulfurique, l'acide nitrique, l'acide phosphorique, l'acide borique, l'acide sulfamique et les sels d'ammonium.

32. Système adhésif conforme à l'une des revendications 19 à 31, **caractérisé en ce que** la proportion pondérale de résine phénolique dans la composition de résine phénolique, calculée en matières sèches, vaut de 20 à 60 %.

33. Système adhésif conforme à l'une des revendications 19 à 32, **caractérisé en ce que** la proportion pondérale de l'acide, y compris ses sels, dans la composition de résine phénolique vaut de 2 à 30 %.

34. Système adhésif conforme à l'une des revendications 19 à 33, **caractérisé en ce que** le pH de la composition de résine phénolique vaut de 0 à 3.

35. Composition stable de résine phénolique, conçue pour être employée dans un système adhésif comprenant une résine aminoplaste à base de mélamine, **caractérisée en ce qu'**elle se présente sous forme de solution aqueuse ou alcoolique, qu'elle comprend un acide et une résine phénolique qui est une résine à base de résorcinol ou une résine à base de tanin, ou un mélange de telles résines, et qu'elle contient de la résine phénolique en une proportion pondérale, calculée en matières sèches, de 10 à 80 %, et laquelle composition de résine phénolique demeure stable durant plus de deux semaines de stockage à température ambiante (20 °C).

36. Composition de résine phénolique, conforme à la revendication 35, **caractérisée en ce que** la résine phénolique est une résine phénol-résorcinol-formol.

37. Composition de résine phénolique, conforme à la revendication 35, **caractérisée en ce que** la résine phénolique est une résine tanin-formol ou un tanin.

38. Composition de résine phénolique, conforme à l'une des revendications 35 à 37, **caractérisée en ce que** l'acide est du chlorure d'aluminium, du nitrate d'aluminium ou du sulfate d'aluminium.

39. Composition de résine phénolique, conforme à l'une des revendications 35 à 37, **caractérisée en ce que** l'acide est choisi dans l'ensemble formé par les acides monocarboxyliques, dicarboxyliques, tricarboxyliques et polycarboxyliques et les acides sulfoniques.

40. Composition de résine phénolique, conforme à la revendication 39, **caractérisée en ce que** l'acide est choisi dans l'ensemble formé par l'acide formique, l'acide acétique et l'acide pyruvique.

41. Composition de résine phénolique, conforme à l'une des revendications 35 à 37, **caractérisée en ce que** l'acide est choisi dans l'ensemble formé par l'acide chlorhydrique, l'acide sulfurique, l'acide nitrique, l'acide phosphorique, l'acide borique, l'acide sulfamique et les sels d'ammonium.

42. Composition de résine phénolique, conforme à l'une des revendications 35 à 41, **caractérisée en ce que** la proportion pondérale de résine phénolique dans la composition de résine phénolique, calculée en matières sèches, vaut de 20 à 60 %.

43. Composition de résine phénolique, conforme à l'une des revendications 35 à 42, **caractérisée en ce que** la proportion pondérale de l'acide, y compris ses sels, dans la composition de résine phénolique vaut de 2 à 30 %.

44. Composition de résine phénolique, conforme à l'une des revendications 35 à 43, **caractérisée en ce que** le pH de cette composition de résine phénolique vaut de 0 à 3.

45. Produit à base de bois, accessible par un procédé conforme à l'une des revendications 1 à 18.

46. Produit à base de bois, conforme à la revendication 45, **caractérisé en ce qu'**il s'agit d'une poutre lamellée.

47. Emploi d'un système adhésif conforme à l'une des revendications 19 à 34 dans la fabrication d'un produit à base de bois.

48. Emploi conforme à la revendication 47, **caractérisé en ce que** le produit à base de bois est une poutre lamellée.
